# EUROPEAN PATENT APPLICATION

(11) **EP 1 564 421 A2**
(43) Date of publication of application: **17.08.2005**
(21) Application number: 05003175.6
(22) Date of filing: 15.02.2005
(51) Int. Cl.: F16B 19/10

(54) **Blind rivet**

(30) Priority: 16.02.2004 JP 2004038610
(71) Applicant: Newfrey LLC, Newark, Delaware 19711 (US)
(72) Inventor: Matsunaga, Yasumasa, Toyohashi-shi,Aichi-ken (JP)
(74) Representative: Haar, Lucas H., Dipl.-Ing.

(57) **Abstract**

A blind rivet (1) comprising a rivet body (2) with a hollow shank (5) and a flange (6) at one end has a mandrel (3) extending through the shank (5) of the rivet body (2) and having a head (10) with cutting edges (14) that facilitate expansion of the end (7) of the rivet body shank (5) opposite to the flange (6) when a pulling force is applied to the mandrel (3) to break the mandrel and extract a portion of the mandrel from the rivet body shank (5) Cooperable portions of the rivet body shank (5) and the mandrel (3) engage one another and prevent rotation of the mandrel with respect to the rivet body (2). Other cooperable portions engage one another to ensure that the mandrel (3) breaks without undue movement of the head (10) into the rivet body shank (5).

## Description

### BACKGROUND OF THE INVENTION

The present invention relates to a blind rivet and, more specifically, to a blind rivet of the type having a mandrel that cuts into the end of the rivet body shank while expanding its diameter. The invention is especially advantageous in a riveting operation involving a blind hole but is not limited to that application.

Well known in the art is a blind rivet comprising a hollow metal rivet body and a metal mandrel longer than the rivet body, in which the mandrel passes through the rivet body and has a grip portion extending from a flange of the rivet body. This rivet has the advantage of being able to fasten a plurality of panels from one side.

There are several different types of blind rivets. In the blind rivet disclosed in US Patent No. 4,620,825 (Patent Document No. 1), a mandrel head with a diameter greater than the rivet body shank is disposed adjacent to an end of the rivet body shank that is opposite to the flange. Cutting edges on the head protrude toward the adjacent end of the rivet body shank and extend lengthwise with respect to the shank. The cutting edges of the mandrel head cut into portions of the adjacent end of the rivet body shank and increase the diameter of adjacent end portions when a grip portion of the mandrel is gripped with a fastening tool and the mandrel is pulled from the flange. A plurality of members such as panels interposed between the expanded diameter portions of the shank and the flange are thus fastened together. When the end of the rivet body shank has been cut open to expand the diameter, it resembles an open flower. As a result, the rivet is sometimes called a petal-type blind rivet.

In US Patent No. 4,897,003 (Patent Document No. 2), the end of the mandrel head facing the adjacent end of the rivet body shank has a conical shape with no cutting edges. Instead, slits are formed in the end of the rivet body shank. When the slitted portion is pushed open with the mandrel head, the diameter at the end of the rivet body shank expands.

In US Patent No. 4,909,687 (Patent Document No. 3), as in Patent Document No. 1, cutting edges are formed on the mandrel head. Here again, the adjacent end of the rivet body shank is cut open by the cutting edges to expand the diameter of the end.

A blind rivet unlike those in Patent Document No. 1 through No. 3 is disclosed in European Patent No. 691,479 (Patent Document No. 4). Here, an end of the rivet body shank expands when a middle portion of the shank buckles. In Patent Document No. 4, a portion at the end of the rivet body shank adjacent to the mandrel head has constricted diameter, and this portion is formed to buckle two-fold or three-fold. The result is a configuration with high fastening force.

The blind rivets described in Patent Document No. 1 through No. 3 have rivet body shanks with ends that open up and expand in diameter. When there is a so-called blind hole to be closed, the expanded diameter portions of the rivet body shank can engage the inside wall of the hole to hold the blind rivet.

For example, when a blind hole is formed as a mounting hole in one of two panels and a mounting hole in the other panel is a through-hole, the blind hole in the one panel is aligned with the through-hole in the other panel; the grip portion of the mandrel is gripped with a fastening tool; the mandrel head is inserted through the through-hole and into the blind holes, the flange is brought into contact with the other panel, and a strong force is applied to pull the mandrel from the flange until a breakable portion of the mandrel has been broken. During pulling, the diameter at an end of the rivet body shank is expanded by the mandrel head, and the rivet body shank end is secured in the blind hole in one of the panels. Because the flange remains in contact with the other panel, the one panel and the other panel are joined together. These blind rivets have the advantage of being able to fasten members when one of the members has a blind hole. Fastening is possible even when the member with the blind hole is made from a flexible material, and the flexible material can be kept from becoming warped during fastening.

However, the blind rivets described in Patent Documents No. 1 through No. 3 have a problem in that the expanded end of the rivet body shank does not open stably or uniformly. This is believed to occur because the cutting force of the cutting edges is neither stable nor uniform when the plurality of cutting edges open up the adjacent end of the rivet body shank.

The force applied to the slit portion in the blind rivet described in Patent Document No. 2 does not appear to be stable or uniform. Furthermore, in the blind rivets described in Patent Documents No. 1 through No. 3, the mandrel head is pulled into the rivet body shank farther than is necessary. Because such deep pulling of the mandrel head can actually result in closing an open end of a rivet body shank, the shank end can disengage from the inner wall of a mounting hole. A mandrel head that does not move more than necessary is therefore desired. Because the blind rivet described in Patent Document No. 4 is of a type in which a tip of the rivet body shank merely buckles, it is not suitable for engaging the inner wall of a blind hole. The blind rivet described in Patent Document No. 4 requires that a through-hole be formed as a mounting hole in each of the panels to be joined.

### BRIEF DESCRIPTION OF THE INVENTION

One purpose of the present invention is to stably and uniformly open an end of the rivet body shank in order to improve the fastening force, particularly when the fastening involves a blind hole. A second purpose of the present invention is to prevent the mandrel head from being pulled into the rivet body shank more than is necessary.

As described in detail later, cutting edges on a mandrel head cut into portions of an adjacent end of a rivet body shank in expanding the diameter of the adjacent end of the rivet body shank when a grip portion of the mandrel is gripped and pulled, so as to break a breakable portion of the mandrel and to extract a portion of the mandrel through a flange of the rivet body shank. In a preferred embodiment, corner portions of a non-circular cross-section portion of the mandrel engage an inner diameter constricting portion of the rivet body shank. The cutting edges of the head of the mandrel are preferably formed so as to be continuous with the corner portions of the mandrel. By virtue of the invention, the cutting edges on the mandrel head stably and reliably cut into the adjacent end of the rivet body shank, allowing the rivet body shank to be cut open securely. The invention improves the fastening force when a blind rivet is used with a blind hole.

In a preferred embodiment, the rivet body shank has a second inner diameter constricting portion which engages corner portions of the mandrel shank to resist the pulling force on the mandrel. In this way, the pulling force is increased; the breakable mandrel portion is quickly broken by the increase in the pulling force; and the mandrel head is kept from being pulled excessively into the rivet body shank. Consequently, the expanded end of the rivet body shank remains open and is less likely to disengage from the inner wall of a blind hole.

### BRIEF DESCRIPTION OF THE DRAWINGS

The invention will be further described in conjunction with the accompanying drawings, which illustrate a preferred (best mode) embodiment, and wherein:
FIG. 1 is a semi-cross-sectional front view of the blind rivet in an embodiment of the invention;
FIG 2 is a cross-sectional view of the blind rivet in FIG 1 at line II-II;
FIG 3 is a cross-sectional view of the blind rivet in FIG 1 at line III-III;
FIG 4 is a cross-sectional view of the blind rivet in FIG 1 at line IV-IV;
FIG 5 is a perspective view of a main portion of the mandrel for the blind rivet in FIG 1;
FIG 6 is a semi-cross sectional front view of a blind rivet of the invention fastened so as to connect two members;
FIG 7 is a cross-sectional view of a blind rivet of the invention showing the fastening of two members;
FIG 8 is a graph showing the mandrel stroke versus extraction load curve (A) when using a blind rivet of the prior art, and the mandrel stroke versus extraction load curve (B) when using a blind rivet of the present invention;
FIG 9 is a diagram of a tensile strength test performed on two members fastened by a blind rivet of the invention;
FIG 10 is a table of the test result data for the test in FIG 9; and
FIG 11 is a graph of the test result data in FIG 10.

### DETAILED DESCRIPTION OF THE INVENTION

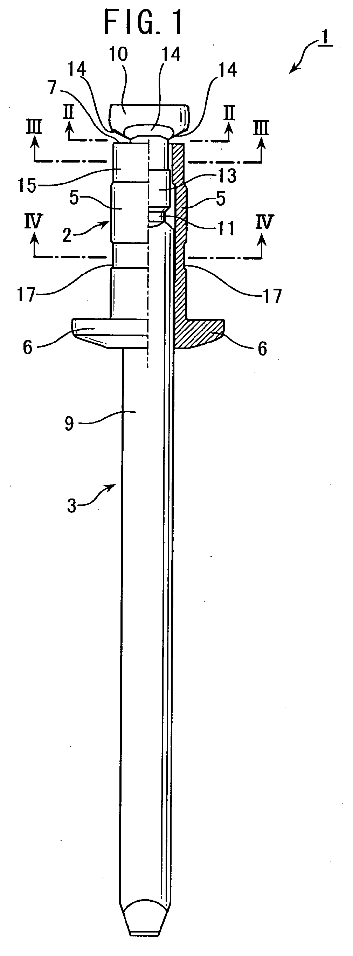

One embodiment of a blind rivet 1 according to the invention is shown in FIGS 1-5. The blind rivet 1 comprises a tubular metal rivet body 2, and a metal mandrel 3 that is longer than the rivet body 2 and passes through the rivet body 2. The mandrel 3 can be made of hard steel wire, for example, and the rivet body 2 can be made of a more flexible material than the mandrel (e.g., an aluminum alloy).

As shown in FIG 1, the rivet body 2 comprises a hollow shank 5 with a flange 6 at one end of the shank. The rivet body 2 shown in the illustrative embodiment has a round flange 6 and a round shank 5. The mandrel 3 comprises a shank 9 somewhat longer than the rivet body shank 5 and a head 10 with a larger diameter than the adjacent end 7 of the rivet body shank 5. The mandrel shank 9 is long enough to protrude from the rivet body flange 6, and the protruding portion is a grip portion able to be gripped by a gripping member of a conventional fastening tool (not shown). The tip of shank 9 can be tapered to facilitate engagement with the fastening tool.

A breakable portion 11 with a diameter smaller than other portions of the mandrel shank 9 is formed in a portion of the mandrel shank in the rivet body shank 5. When the mandrel 3 is pulled using a fastening tool, the breakable portion 11 breaks once a predetermined pulling force is exceeded. Before the mandrel breaks, the pulling force is applied to the end 7 of the rivet body shank 5 from the head 10, and this force deforms the shank 5. The portion of the mandrel gripped by the fastening tool after the mandrel breaks is extracted from the rivet body 2 and can be recovered by the recovery box on the fastening tool. The position of the breakable portion can be varied, but in this embodiment it allows for the recovery of most of the mandrel 3 and for maintenance of a high recovery rate.

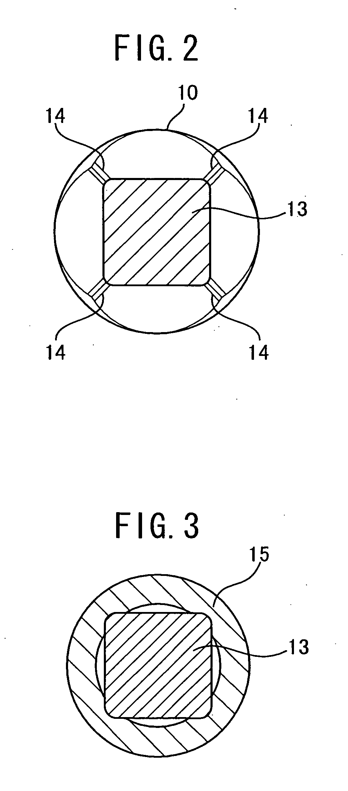

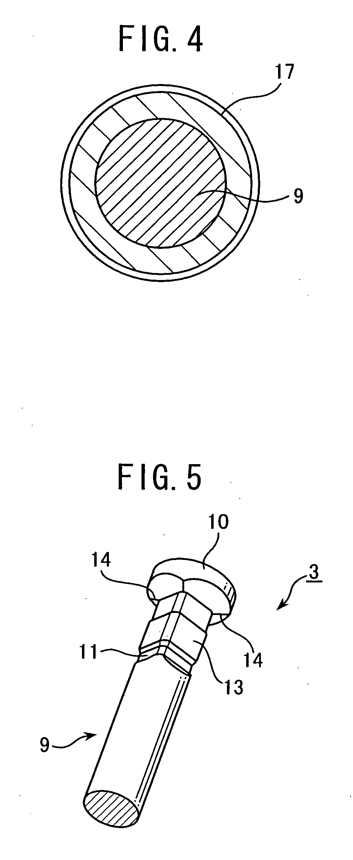

The following is an explanation of the mandrel 3 with reference to FIG 2 through FIG 5. The mandrel 3 is rod-shaped with a round cross-section shank 9 extending from the flange 6 to the breakable portion 11 (see FIG 4 and FIG 5), and is rod-shaped with square cross-section from the breakable portion 11 to the head 10. As shown in FIG 5, the shank portion 13 between the head 10 and the breakable portion 11 has a square cross-section somewhat larger than the breakable portion 11, which in this embodiment has a square cross-section. The surface of the head 10 facing the end 7 of the rivet body shank 5 is an inclined surface, and cutting edges 14 are formed on the head 10, protruding towards the adjacent end 7 of the rivet body shank 5 and the inner wall of the shank 5 and extending lengthwise with respect to the shank 5. A plurality of cutting edges 14 are formed at predetermined intervals circumferentially on the inclined surface of the head 10. In the embodiment shown in the figures, there are four cutting edges 14 formed at 90° intervals. The cutting edges are formed so as to extend as continuations of the corner portions of the square cross-section portion 13 of the mandrel shank 9. The number of cutting edges can vary, but should be sufficient to provide cutting edges at corner portions of an adjacent polygonal cross-section portion.

When the mandrel 3 is pulled from the rivet body 2 using the fastening tool, the cutting edges 14 cut into the end 7 and the inner wall of the rivet body shank 5 with a force corresponding to the mandrel pulling force, and the end 7 of the rivet body shank 5 is cut open. When there are four cutting edges 14 as shown in the figures, the end 7 of the rivet body shank 5 is cut open into four portions, and the diameter of the shank 5 is expanded.

As shown in FIG 1, the rivet body shank 5 has a first diameter constricting portion 15 near the end 7 adjacent to the cutting edges 14 of the mandrel head 10. The inward constriction from the outer surface reduces the diameter compared to other portions of the shank 5. As shown in FIG 3, some of the inner wall of constricting portion 15 comes into close contact with the corner portions of the mandrel shank portion 13 with the square cross-section, which bite into the inner wall. In this way, the rivet body shank 5 can be secured with respect to the mandrel shank 9 without any rotating.

Because the cutting edges 14 are continuous with corner portions of an adjacent portion with square cross-section, the surface of the end 7 of the rivet body shank 5 is positioned correctly, and the opening up of the shank 5 by the cutting edges 14 is stable. Because the shank 5 has a first diameter constricting portion 15 near the end 7 of shank 5 adjacent to the cutting edges 14 of the mandrel head 10, some of the inner wall of the rivet body shank 5 (in the first diameter constricting portion 15) comes into contact with the outer surface of the shank portion 13 of the mandrel 3; the cutting edges 14 on the mandrel 10 stably and reliably cut into the end 7 of the rivet body shank 5; and the rivet body shank end 7 is reliably opened up stably and uniformly so as to improve the fastening force when fastening a blind rivet in a blind hole.

The rivet body shank 5 also has a second diameter constricting portion 17, between the flange 6 and the position corresponding to the breakable portion 11, which is constricted inwardly from the outer surface and reduces the diameter of the shank 5. As shown in FIG 4, the inner wall of the second diameter constricting portion 17 comes into contact with an entire shank portion of the mandrel 3. When the mandrel 3 is pulled, the breakable portion 11 moves into the second diameter constricting portion 17, and the portion 13 with a cross-sectional dimension larger than the breakable portion moves towards the second diameter constricting portion 17. However, because of its large dimension, it cannot move very far, and it resists the pulling of the mandrel 3. As a result, the pulling force is increased, and the mandrel breaking force is quickly reached. This keeps the mandrel head 10 from being pulled into the rivet body shank 5 farther than necessary. Consequently, the end 7 of the rivet body shank remains open and is less likely to disengage from the inner wall of a mounting hole.

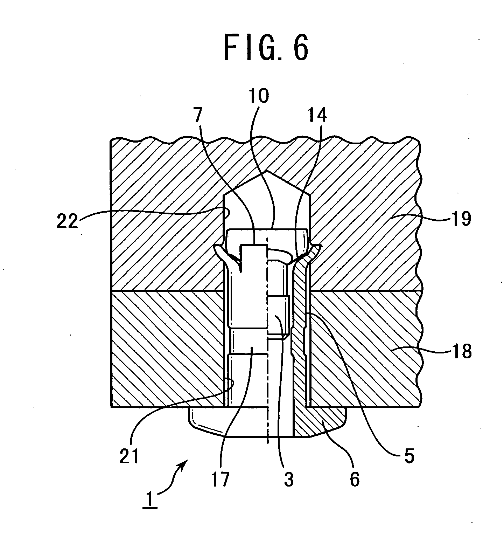

FIG 6 shows two members 18, 19 connected to one another using the blind rivet 1. A through-hole 21 is formed as the mounting hole in the first member 18, and a blind hole 22 closed at one end (the top end in FIG 6) is formed as the mounting hole in the second member 19.

The second member 19 can be a rigid material such as a metal panel or a flexible material such as plastic. The through-hole 21 and the blind hole 22 in the first and second members 18, 19 are aligned; the grip portion of the mandrel 3 is gripped using the fastening tool; the mandrel head 10 on the blind rivet 1 is inserted through the through-hole 21 and into the blind hole 22; and the blind rivet 1 is pushed into the through-hole 21 and the blind hole 22 until the flange 6 is brought into contact with the first member 18. The mandrel 3 is then forcibly pulled from the flange 6 until the breakable portion 11 breaks. The strong pulling force causes the cutting edges 14 on the mandrel head 10 to cut open the end 7 of the rivet body shank 5 in the blind hole 22, and the shank 5 is expanded in four directions outward radially, so the expanded diameter portion strongly engages the inner wall of the blind hole 22. This engaging action strongly secures the rivet body shank 5 to the inner wall of the blind hole 22 in the second member 19. Because the flange 6 is in contact with the first member 18, the first member 18 and the second member 19 are connected to one another. The blind rivets of the invention have the advantage of being able to fasten members even with a blind hole. Fastening is possible even when the member in which the blind hole has been formed is made from a flexible material, and the flexible material can be kept from becoming warped during fastening.

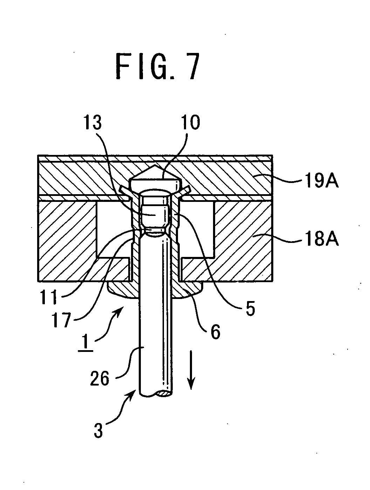

FIG 7 is a diagram used to explain the action of the second diameter constricting portion 17 in the fastening operation of the blind rivet 1. When a mandrel is pulled from a blind rivet of the prior art in which there is no second diameter constricting portion, the mandrel head may be pulled into the rivet body shank without breaking of the mandrel. This is especially possible when the second member 19A fastened to the first member 18A is a flexible material. Deep pulling of the mandrel head can act to close an open rivet body shank end inward in the radial direction, so that the shank end disengages from the inner wall of the hole.

In contrast, the blind rivet 1 of the present invention shown in FIG 7 has a second diameter constricting portion 17 in the rivet body shank 5 between the flange 6 and the position corresponding to the breakable portion 11 of the mandrel 3. When the mandrel 3 is pulled, the mandrel shank portion 13 meets the opening to the second diameter constricting portion 17 but is prevented from entering the second diameter constricting portion. Thus the force used to pull the mandrel 3 has to be increased, and the force required to break the mandrel is quickly reached. As a result, the head 10 of the mandrel 3 is kept from being pulled into the rivet body shank 5 farther than is necessary. Consequently, the expanded portion at an end of the rivet body shank remains open and is unlikely to disengage from the inner wall of a hole.

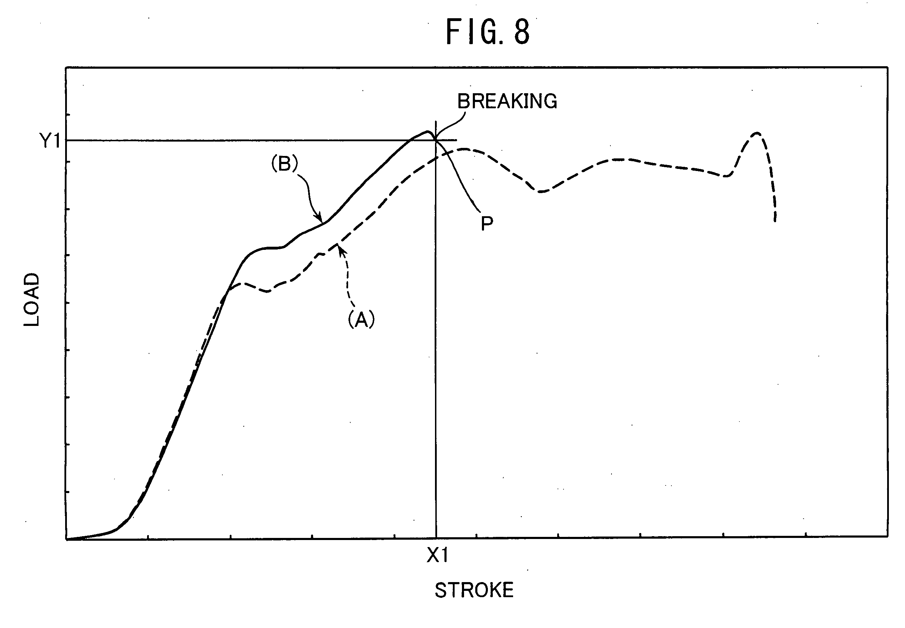

FIG 8 is a graph showing the mandrel stroke versus extraction load curve (A) when fastening uses a blind rivet of the prior art and the mandrel stroke versus extraction load curve (B) when fastening uses a blind rivet of the present invention. In curve (A), the mandrel does not reach breaking force, and the mandrel head is pulled into the rivet body without breaking the mandrel. In curve (B), the mandrel shank portion 13 engages the second diameter constricting portion 17 and applies extraction resistance to the pulling of the mandrel 3. The mandrel 3 breaks properly (at P) when the maximum load y1 is reached at stroke x1. In this way, the mandrel head can be kept from excessive movement even when the second member 19A is made of a flexible material and even when it is hollow.

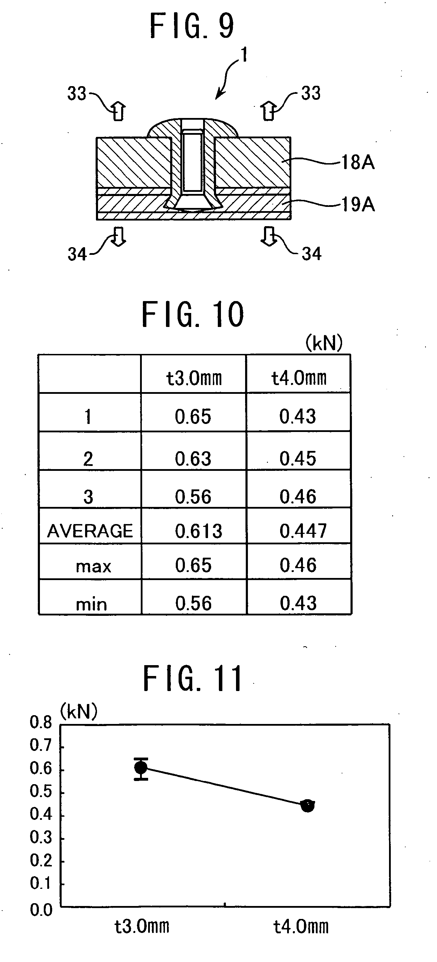

A tensile (extraction) strength test was performed on the first member 18A and second member 19A fastened together using a blind rivet 1 of the present invention. In the test, as shown in FIG 9, the tensile strength tester applied loads in the direction of arrows 33 and 34, and the maximum load at which the fastened portion broke was measured. In this test, the first member 18A was an aluminum (A5052) panel and the second member 19A was a composite panel of aluminum and synthetic resin. Two first members 18A were tested, one with a thickness (t) of 3.0 mm and another with a thickness (t) of 4.0 mm. The diameter of the mounting hole was 4.4 mm. The second member 19A had a thickness (t) of 4.0 mm. The blind hole of the second member had a diameter of 4.4 mm and a depth of 3.0 mm.

FIG 10 is a table showing the extraction load data from the results of a tensile strength test performed three times, and FIG 11 is a graph of the result data. From the results, it is clear that the thinner (thickness t = 3.0 mm) first member 18A has higher extraction resistance or fastening force than the thicker one (thickness t = 4.0 mm).

While a preferred embodiment of the invention has been shown and described, it will be apparent that changes can be made without departing from the principles and spirit of the invention, the scope of which is defined in the following claims.

## Claims

1. A blind rivet (1) comprising a hollow rivet body (2) and a rod-shaped mandrel (3), wherein the rivet body (2) comprises a tubular shank (5) and a flange (6) integrated with one end of the shank, wherein the mandrel (3) passes through the rivet body (2) and has a grip portion extending from the flange (6), wherein the mandrel (3) has a head (10) disposed adjacent to the other end (7) of the shank (5) and formed with a diameter greater than the outer diameter of the other end (7) of the shank (5), wherein the head (10) is formed with cutting edges (14) protruding toward the other end (7) and the inner wall of the shank and extending lengthwise with respect to the shank, wherein the shank (5) has a first constricted portion (15) that reduces the inner diameter of the shank, and wherein the cutting edges (14) of the mandrel head (10) are constructed to cut into the first constricted portion (15) of the shank (5) as the head (10) expands the first constricted portion (15) of the shank when the grip portion of the mandrel (3) is gripped and the mandrel is pulled from the flange (6).

2. A blind rivet described in Claim 1, wherein the mandrel head (10) is formed so the surface facing the other end (7) of the rivet body shank (5) is an inclined surface, and wherein the cutting edges (14) are formed at predetermined circumferential intervals on the inclined surface.

3. A blind rivet described in Claim 2, wherein a portion (13) of the mandrel (3) adjacent to the head (10) is formed with a polygonal cross-section, and wherein the cutting edges (14) on the head (10) are formed so as to be continuous with corner portions of the polygonal cross-section portion (13).

4. A blind rivet described in Claim 3, wherein the corner portions bite into the first constricted portion (15) of the shank (5).

5. A blind rivet described in anyone of the preceding Claims, wherein the mandrel (3) has a breakable portion (11) whose cross-sectional area is less than other portions of the mandrel (3) and disposed at a position between the first constricted portion (15) and a position corresponding to the flange (6), wherein the mandrel (3) has a polygonal cross-section portion (13) between the breakable portion (11) and the head (10), and wherein the shank (5) has a second constricted portion (17) between the flange (6) and a position corresponding to the breakable portion (11), which reduces the inner diameter of the shank (5), and which is disposed to engage corner portions of the polygonal cross-section portion (13) of the mandrel (3) to limit the movement of the head (10) of the mandrel (3) into the shank (5) when the mandrel (3) is pulled from the flange (6) and the breakable portion (11) is broken.
